# EUROPEAN PATENT APPLICATION

(11) **EP 3 216 686 A1**
(43) Date of publication of application: **13.09.2017**
(21) Application number: 17159828.7
(22) Date of filing: 08.03.2017
(51) Int. Cl.: B62M 6/65, B62M 6/45

(54) **POWER WHEEL AND BICYCLES CONTAINING THE SAME**

(30) Priority: 09.03.2016 US 201615065709
(71) Applicant: Foster Assets Corporation, Hong Kong (CN)
(72) Inventor: CHAN, Yet, Kwun Tong, Hong Kong (CN)
(74) Representative: Marks & Clerk (Luxembourg) LLP

(57) **Abstract**

A wheel hub capable of being coupled to an axle of a wheel such that the wheel hub is rotatable around the axle. The wheel hub includes a housing adapted to be rotatably supported on the axle, a motor including a stator (42) and a rotor (40) , and a battery module (32). The stator(42) is adapted to be fixedly connected to the axle. The rotor (40) is connected to the housing via a transmission mechanism (19) . Both the battery module (32) and the motor are located inside the housing, but the battery module (32) is placed external of the motor. Since the battery cells are located outside of the motor in the wheel hub, there is provided great flexibility to the number of battery cells installed in the power wheel.

## Description

### FIELD OF INVENTION

This invention relates to vehicle wheels which can be self-propelled, and which are suitable for installing on bicycles, tricycles and four-wheel vehicles.

### BACKGROUND OF INVENTION

Many modem bicycles and light vehicles are designed to use electric power for driving the wheels to advance, as a replacement of man-power pedaling structure or as an supplement to it. Typical electric bicycles feature a motor installed on the bicycle which is either directly coupled to the wheel shaft or through transmission means like belts or chains. To enable the motor to work properly, a rechargeable battery and a controller are also installed on the bike and connected to the motor for using in cooperation with the motor.

However, many conventional electric bicycles (or called e-bikes) are required to configure a battery module separate from the motor module and that the battery module needs to be fixed somewhere on the bicycle frame. In addition, the controller of the e-bike is also made as a separate module which is fixed on another location of the bicycle frame. Such designs disadvantageously increase the design complexity of the bicycle structure as some space on the bicycle frame has to be reserved for mounting the battery and controller, which may also affect negatively the ergonomic design of the bicycle as the user's pedaling movement may be impeded by these standalone modules. In addition, it poses a challenge for users to convert a conventional bicycle to an e-bike as the frame may not be compatible with the separate modules required to be installed in order to drive the wheels.

### SUMMARY OF INVENTION

In the light of the foregoing background, it is an object of the present invention to provide an alternate electric bike and its wheel module which eliminate or at least alleviate the above technical problems.

The above object is met by the combination of features of the main claim; the subclaims disclose further advantageous embodiments of the invention.

One skilled in the art will derive from the following description other objects of the invention. Therefore, the foregoing statements of object are not exhaustive and serve merely to illustrate some of the many objects of the present invention.

Accordingly, the present invention in one aspect is a wheel hub capable of being coupled to an axle of a wheel such that the wheel hub is rotatable around the axle. The wheel hub includes a housing adapted to be rotatably supported on the axle, a motor including a stator and a rotor, and a battery module. The stator is adapted to be fixedly connected to the axle. The rotor is connected to the housing via a transmission mechanism. Both the battery module and the motor are located inside the housing, but the battery module is placed external of the motor.

Preferably, the rotor and the stator of the motor are arranged to be coaxial with the axle around a central axis when the wheel hub is supported on the axle. The battery module is located in an inner space of the housing which is external of the rotor and the stator along a radial direction from the central axis.

More preferably, the inner space is in a circumferential shape.

In an exemplary embodiment of the present invention, the battery module further contains a plurality of battery cells evenly distributed in the inner space.

In one implementation, the battery cells each is in a longitudinal shape. At least a part of the battery cells are configured in a way that their longitudinal directions are parallel to the central axis.

In another implementation, the battery module contains two or more rows of the battery cells stacked one on another along the radial direction.

In another exemplary embodiment of the present invention, two or more of the battery cells are electrically connected together via one or more conductive strip.

In one variation, the battery module is fixedly connected to a casing of the motor whereby the battery module is not rotatable with respect to the axle.

According to yet another exemplary embodiment of the present invention, the transmission mechanism further contains a gear reduction module.

Preferably, the gear reduction module is a planetary gear system. An input of the planetary gear system is connected to an output shaft of the motor, and an output of the planetary gear system is connected to the housing.

According to yet another exemplary embodiment of the present invention, the transmission mechanism further contains a one-way clutch. An input of the one-way clutch is connected to an output shaft of the motor; an output of the one-way clutch connected to the housing.

Preferably, the one-way clutch contains a flywheel.

In one variation, the wheel hub further includes a controller contained in the housing and connected to the motor. The controller is further adapted to connect to an external device.

In another variation, the wheel hub further includes a sprocket fixedly connected to the housing. The sprocket is adapted to be connected to and driven by an external chain.

According to another aspect of the present invention, there is disclosed a power wheel which is adapted to be coupled to a vehicle frame. The power wheel includes an axle for connecting the power wheel to the vehicle frame, a wheel hub coupled to the axle such that the wheel hub is rotatable around the axle, and a rim fixedly connected to the housing of the wheel hub. The wheel hub further includes a housing adapted to be rotatably supported on the axle, a motor including a stator and a rotor; the stator adapted to be fixedly connected to the axle, and a battery module. The rotor is connected to the housing via a transmission mechanism. Both the battery module and the motor are located inside the housing. The battery module is placed external of the motor.

Preferably, the power wheel further comprises a plurality of spokes, where the housing of the wheel hub is connected to the rim by the plurality of spokes.

According to yet another aspect of the present invention, there is disclosed a bicycle including a frame and at least one power wheel rotatably connected to the frame. The power wheel includes an axle for connecting the power wheel to the vehicle frame, a wheel hub coupled to the axle such that the wheel hub is rotatable around the axle, and a rim fixedly connected to the housing of the wheel hub. The wheel hub further includes a housing adapted to be rotatably supported on the axle, a motor including a stator and a rotor; the stator adapted to be fixedly connected to the axle, and a battery module. The rotor is connected to the housing via a transmission mechanism. Both the battery module and the motor are located inside the housing. The battery module is placed external of the motor.

Preferably, the bicycle further contains a handle bar connected to the frame, and a display panel mounted on the handle bar. The power wheel further contains a controller contained in the housing and connected to the motor. The controller is further electronically connected to the display panel.

In one variation, the display panel is connected to the display panel by wires.

In another variation, the display panel is connected to the display panel through wireless communication devices.

There are many advantages to the present invention. Firstly, one can see that the power wheel according to the present invention is a separate and integral piece, since all the essential components necessary for the wheel to self-propel are contained in the housing of the power wheel. Such components include the motor, the battery module, the controller, and the gear reduction module. In other words, there are no bulky external components or devices required for the power wheel to function once it is installed to a unicycle, bicycle, tricycle, or four-wheel vehicle. In this way, the power wheel can be easily configured to replace existing bicycle wheels in a bicycle, thus converting the bicycle to an electric bicycle. Depends on the user's preference, one or more of the wheels of the above vehicles can be replaced with the power wheel according to the present invention to enable multi-wheel drive or all-wheel drive.

In addition, the present invention introduces a battery module configuration where the battery cells are accommodated in an inner space of the power wheel housing external of the motor. The battery cells are therefore not placed inside any part of the motor, but at a location which is further away along the radial direction of the power wheel than the motor. Such a configuration not only allows a great number of battery cells to be implemented in the power wheel, which increases the power and endurance ability of the electric bicycle, but also it means that according to requirements the number of battery cells can be varied for example by increasing the size of the housing. The available space for storing the battery cells in the power wheel only depends on the diameter of the power wheel as a whole.

### BRIEF DESCRIPTION OF FIGURES

The foregoing and further features of the present invention will be apparent from the following description of preferred embodiments which are provided by way of example only in connection with the accompanying figures, of which:
Fig. 1 is a front view of the power wheel according to one embodiment of the present invention.
Fig. 2 is the side cross-sectional view of the power wheel in Fig. 1.
Fig. 3 is a side cross-sectional view of the power wheel hub in the power wheel of Fig. 2.
Fig. 4 is another cross-sectional view of the power wheel hub in the power wheel of Fig. 3 along the line A-A therein.
Fig. 5a shows the connections between individual battery cells in the power wheel which form multiple battery parts each having a negative pole, according to one embodiment of the present invention.
Fig. 5b shows the connections between individual battery cells in the power wheel in Fig. 5a, which form multiple battery parts each having a positive pole.
Fig. 6 shows a bicycle with a power wheel installed as the front wheel, and the connection of the power wheel to a display panel by wires, according to one embodiment of the present invention.
Fig. 7 shows a bicycle with a power wheel installed as the rear wheel, and the connection of the power wheel to a display panel by wires, according to another embodiment of the present invention.
Fig. 8 shows a bicycle with two power wheels installed, and the connection of the power wheels to a display panel by wires, according to yet another embodiment of the present invention.

In the drawings, like numerals indicate like parts throughout the several embodiments described herein.

### DETAILED DESCRIPTION OF THE PREFERRED EMBODIMENTS

In the claims which follow and in the preceding description of the invention, except where the context requires otherwise due to express language or necessary implication, the word "comprise" or variations such as "comprises" or "comprising" is used in an inclusive sense, i.e. to specify the presence of the stated features but not to preclude the presence or addition of further features in various embodiments of the invention.

As used herein and in the claims, "couple" or "connect" refers to electrical coupling or connection either directly or indirectly via one or more electrical means unless otherwise stated.

Terms such as "horizontal", "vertical", "upwards", " downwards", "above", "below" and similar terms as used herein are for the purpose of describing the invention in its normal in-use orientation and are not intended to limit the invention to any particular orientation.

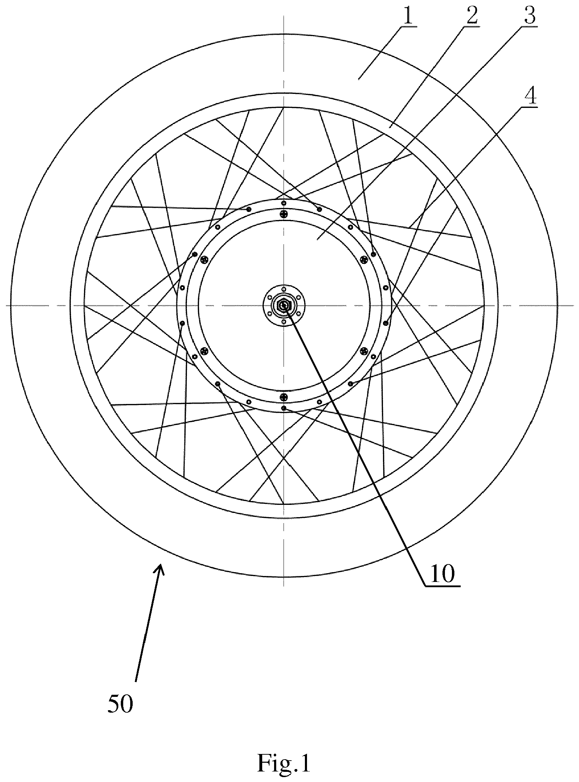

Fig. 1 shows a power wheel **50** according to a first embodiment of the present invention, which includes a wheel tire **1,** a rim **2,** a wheel hub **3,** and a plurality of spokes **4.** The wheel hub **3** is connected to the rim **2** by the plurality of spokes **4,** so that the rim **2** and the wheel hub **3** rotate together when the wheel hub **3** is driven to move by a mechanical force. To be able to rotate, the wheel hub **3** and in turn the rim **2** are rotatably supported on an axle **10** (which will be described in details later). The tire **1** covers the exterior surfaces of the rim **2** to protect the rim and enable better vehicle performance, as skilled persons in the art would appreciate. The wheel **50** in this embodiment is made to a dimension of a typical bicycle wheel, so that the power wheel **50** can be used to replace a normal bicycle wheel on an existing bicycle by simply coupling the axle **10** to the frame or more specifically a dropout of the bicycle frame (not shown).

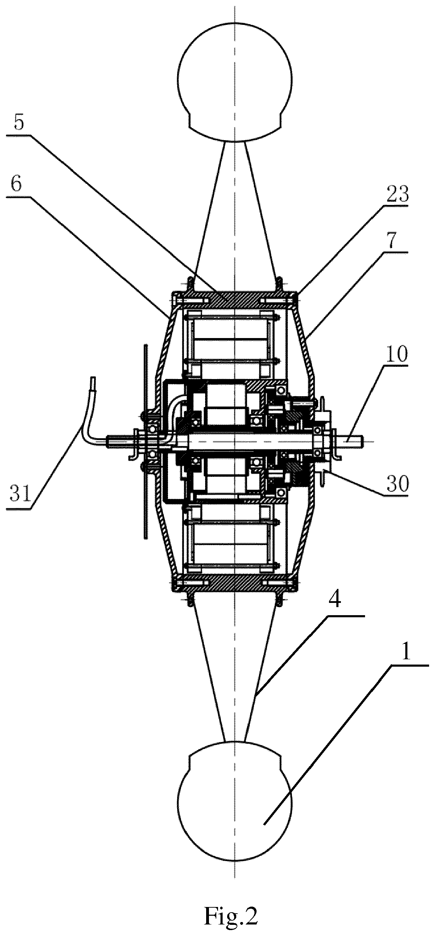

Turning now to Fig. 2, the housing of the wheel hub is defined by a first cover **6,** a second cover **7,** and a housing body **5.** All the components necessary for the self-propelling operation of the power wheel are contained within the housing. The first cover **6,** the second cover **7,** and the housing body **5** are connected together by a number of screws **23.** The wheel hub housing is rotatably supported on the axle **10** as mentioned above. The width of the housing, which is defined by the distance between the portions of the first cover **6** and the second cover **7** separated furthest away, is larger than the width of the tire **1.** The housing width is so determined in order for the housing to accommodate the motor and its transmission mechanism. On one end of the axle **10,** there is configured a sprocket **30** which is fixed to the second cover and rotatable together with the same. The sprocket **30** is capable of engaging with a chain (not shown) of a bicycle as those skilled in the art would understand. Adjacent to another end of the axle **10,** an electric wire **31** extends out of the first cover **6.** The electric wire **31** is connected at its one end to a controller in the power wheel hub (which will be described in more details later), and its other end is capable of connecting to an external device such as a display panel or a control knob.

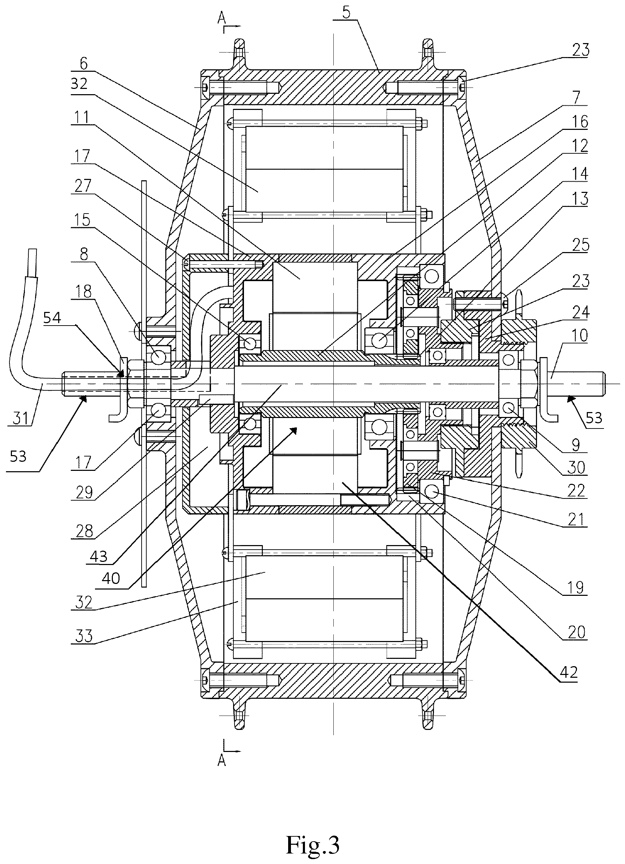

Referring to Fig. 3, in which the detailed structure of the power wheel hub is shown. The housing of the wheel hub is rotatably supported on the axle **10** by more than one bearing. In particular, the first cover **6** is coupled to the axle **10** by a first bearing **8.** The second cover **7** on the other side is connected to a connecting flange **24** via screws **25.** The connecting flange **24** is further equipped with a bearing **9** for coupling to the axle **10.** The connecting flange **24** therefore enables the second cover **7** to be rotatably supported on the axle **10.** Together, the bearing **8** and **9** supports the whole wheel hub on the axle **10** and the whole or part of the bicycle weight is in turn supported on the power wheel.

The two ends **53** of the axle **10** are shaped to have a flattened cross-section, and in other words the two ends **53** have a cross-section of which the dimension along one orthogonal direction is different from the dimension along another orthogonal direction. Corresponding to such flattened cross-sectional shape of the axle ends **53,** two hook washers **18** are configured to sleeve the two ends **53** of the axle **10** respectively through flattened openings **54** formed on the hook washers **18.** The openings **54** have a shape which are also flattened, and thus corresponding to the cross-sectional shape of the axle ends **53.** Therefore, the axle **10** is prohibited from rotating with respect to the hook washers **18** due to the flattened axle ends **53** and the hook washers **18.** The hook washers **18** are used to install the axle and the power wheel to the dropouts on a bicycle frame (not shown) as those skilled in the art would understand.

A motor **11** is configured on the axle **10** which is at the same time located within the housing of the wheel hub. The motor **11** includes a hollow shaft **12** through which the axle **10** passes. The shaft **12** is rotatable relative to the axle **10** due to bearings **14** and **15** on two ends of the shaft **12.** The bearing **14** supports the shaft **12** on a first motor cap **16,** and the bearing **15** supports the shaft **12** on a second motor cap **17.** In addition, the second motor cap **17** has a flat key **29** which fits to a corresponding recess portion (not shown) of the axle **10,** so that the motor **11** as a whole is firmly connected to axle **10** and not rotatable with respect to the axle **10.** The motor **11** further contains a stator **42** and a rotor **40** which are coaxial with the motor shaft **12** and in fact the axle **10** around a central axis **43.** The stator **42** surrounds the rotor **40** which is known to be an "outer stator, inner rotor" motor configuration. The rotor **40** is fixedly coupled to the shaft **12** so the two rotate at the same time. The stator **42** is fixed to the first motor cap **16** and the second motor cap **17** on its two ends along the central axis **43.**

The power wheel hub further contains a transmission mechanism, which includes a gear reduction module and a one-way clutch. As shown in Fig. 3, on one end of the shaft **12** there are connected multiple planetary gears **19** and a ring gear **20,** where the ring gear **20** is fixed to the first motor cap **16** of the motor **11.** The ring gear **20** allows the planetary gears **19** which engage the ring gear **20** at its interior circumference to revolve. The multiple planetary gears **19** are further connected to an output carrier **22,** as well as a gear **13** fixed on the shaft **12.** The output carrier **22** provides the output driving force of the gear reduction module. When the shaft **12** rotates, the planetary gears **19** are forced to revolve along the interior circumference of the ring gear **20,** which results in the output carrier **22** rotates at an angular speed lower than that of the shaft **12.**

In addition, the gear reduction module is connected to the one-way clutch so that while an output driving force from the gear reduction module may drive the power wheel through the one-way clutch, a rotation of the power wheel would not reversely cause the gear reduction module to rotate passively. In particular, the one-way clutch includes a flywheel **23** which is fixedly connected to the second motor cap **17** of the motor **11** via a connecting flange **24** and a plurality of bolts **25.** The flywheel **23** is coupled to the output carrier **22** and the housing body **5** at the same time. Typically, such flywheel **23** includes a follower (e.g. a ratchet) and a driving part (e.g. a ring gear), which are not shown in the drawings. The follower is connected to the housing body **5** and the driving part is connected to the output carrier **22.** As those skilled would understand, the follower will be driven by the driving part to rotate only when the rotational speed of the driving part is larger than that of the follower. Conversely, when the follower rotates at a speed larger than that of the driving part, the follower slips over the driving part and not causing the latter to rotate.

On another end of the shaft **12,** a controller **28** is configured which is electrically connected to the motor **11** and the battery module (which will be described in more details later). The controller **28** is configured for the controlling the motor operation. The controller **28** receives external command signals from the electric wire **31** mentioned above. Moreover, the electric wire **31** transmits various data including parameters and operations status from the controller **28** to external devices such as a display panel.

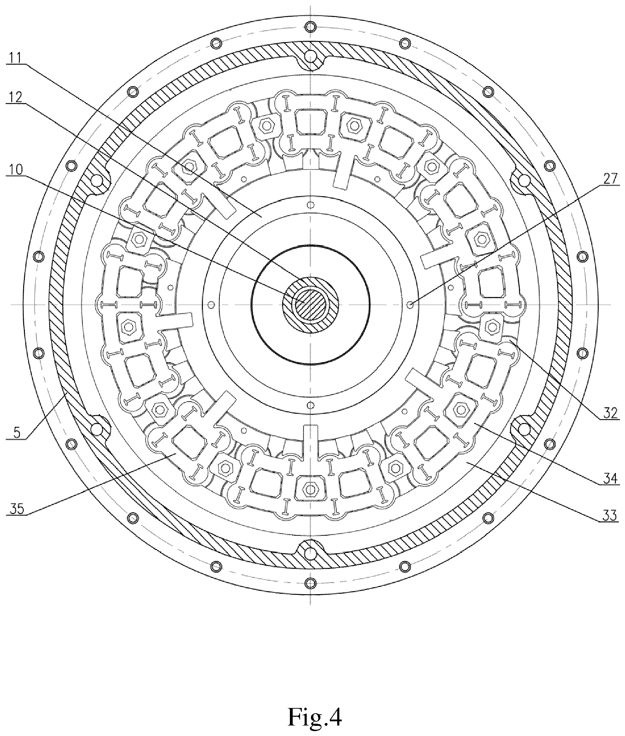

Also shown in Fig. 3 is the battery module of the power wheel **50** which includes multiple battery cells **32** installed in the power wheel hub. The battery module is fixedly connected to the motor **11** whereby the battery module is not rotatable with respect to the axle **10.** The battery cells **32** are fixed to the power wheel hub housing by battery supports **33** which are in turn fixed to the second motor cap **17** of the motor **11** by bolts **27.** Fig. 4 shows the battery module with greater details. The battery support **33** is a circular part which is configured to be external of the motor **11** and coaxial with the axle **10** and the shaft **12** which all share the same central axis **43** (see Fig. 3). There are two battery supports **33** in the power wheel hub and they are configured to be parallel to each other.

The battery cells **32** are placed between the circumferential inner space formed by the interior circumference of the housing body **5** and the motor **11.** The battery cells **32** and the battery support **33** are further away from the motor shaft **12** than the motor **11,** including the motor stator **42** and rotor **40,** along the radial direction from the central axis **43.** Therefore, the battery cells **32** and the battery support **33** are external of the motor **11,** such that none of the battery cells **32** are placed inside the space defined by the motor **11.**

The battery cells **32** are arranged in the circumferential inner space in two rows, and they are evenly distributed along the 360° circumferential direction. As shown in Fig. 4, one row of battery cells **32** is placed external to another row of battery cells **32** along the radial direction. In other words, one row of battery cells **32** is stacked on another one row of battery cells **32** along the radial direction. However, the number of battery cells **32** in each row is the same. The battery cells **32** each is in a longitudinal shape, and the battery cells **32** are configured in a way that their longitudinal directions are parallel to the shaft **12.** In the battery module, multiple adjacent battery cells **32** are interconnected by conductive strips **34, 35.** The conductive strips **34, 35** are made of metal. As shown in Fig. 4, each short conductive strip **35** connects four battery cells **32** together, and in comparison each long conductive strip **34** connects eight battery cells **32** together.

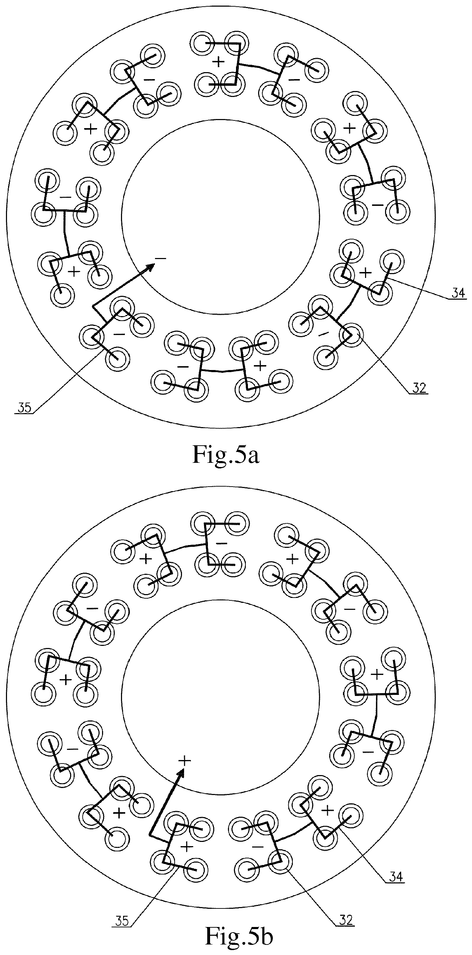

Turning now to Figs. 5a and 5b. The electrical connections between the battery cells **32** are illustrated with schematic representations of the short conductive strip **35** and the long conductive strip **34.** Fig. 5a shows the view when looking at the battery module along one direction and Fig. 5b shows the view along an opposite direction. The battery cells connected by a single conductive strip **34, 35** form a battery part. For four battery cells **32** connected by short conductive strips **35,** the cathodes of the four battery cells **32** are connected by a short conductive strip **35** which provides a total negative output as a negative pole of the battery part, which is shown in Fig. 5a. Likewise, the anodes of these four battery cells **32** are connected by another short conductive strip **35** which provides a total positive output as a positive pole of the battery part, which is shown in Fig. 5b. Together, the two short conductive strips **35** provide an output with the same voltage as that of a single battery cell **32,** but four times the capacity / current of a single battery cell **32.** This is because the four battery cells **32** are connected by the short conductive strips **35** in parallel.

For eight battery cells **32** connected by long conductive strips **34,** the cathodes of the eight battery cells **32** are connected by a long conductive strip **34** which provides a total negative output as a negative pole of the battery part, which is shown in Fig. 5a. Likewise, the anodes of these eight battery cells **32** are connected by another long conductive strip **34** which provides a total positive output as a positive pole of the battery part, which is shown in Fig. 5b. Together, the two long conductive strips **34** provide an output with twice the voltage of a single battery cell **32,** but four times the capacity / current of a single battery cell **32.** This is because among the eight battery cells **32,** each four of them are connected in parallel, and the two four-cell parts are connected in series. The outputs of all the long conductive strips **34** and short conductive strips **35** are then connected in certain ways to provide the overall output of the battery module.

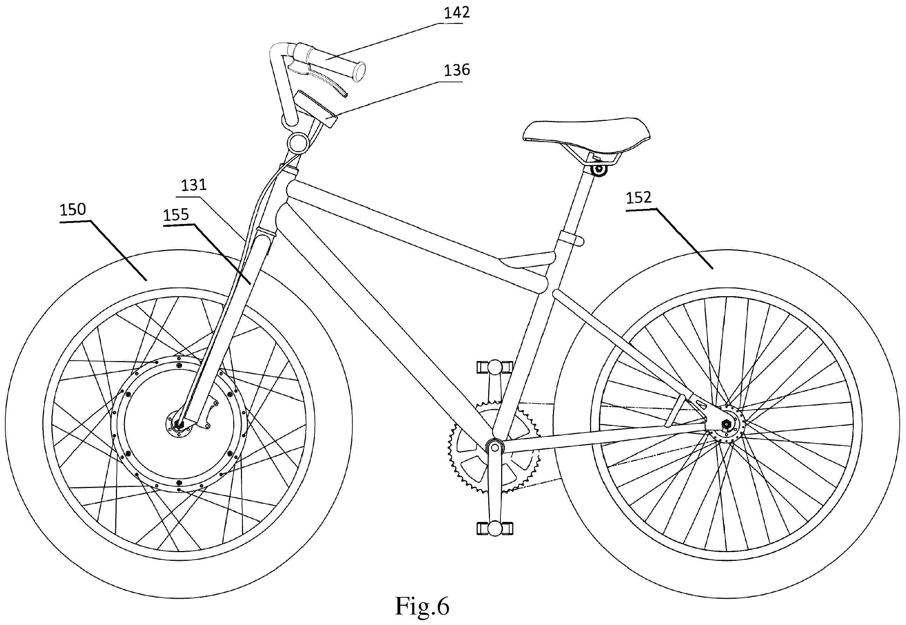

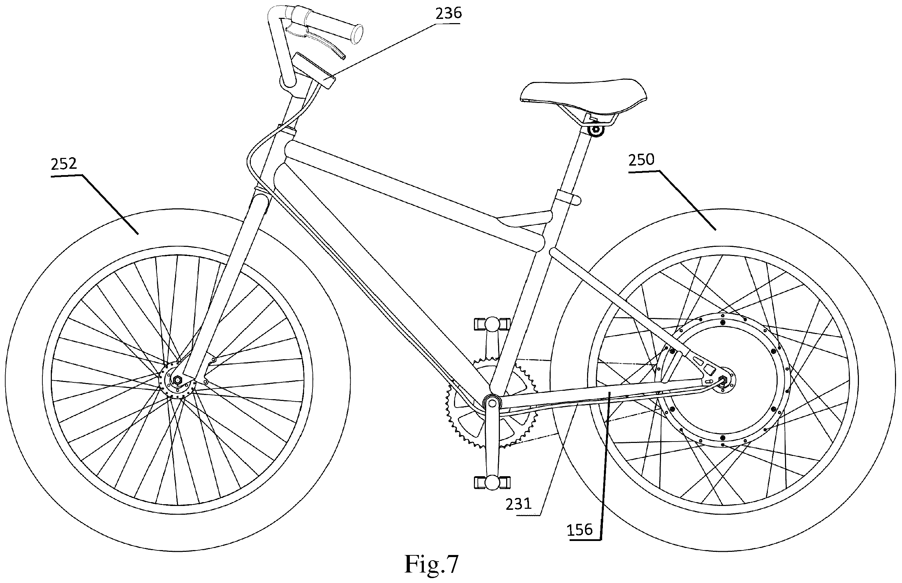

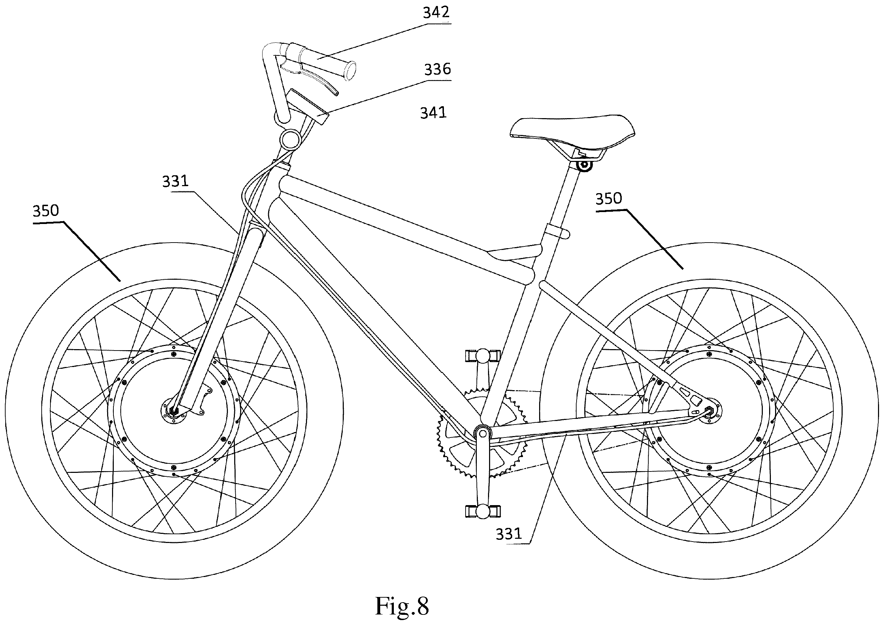

Figs. 6-8 show three different embodiments of bicycles in which different numbers of power wheels are configured. The embodiment of power wheel described in Fig. 1 - 5b would be applicable to the bicycle shown in Figs. 7 and 8. In Fig. 6, there is only one power wheel **150,** which is installed to the bicycle as a front wheel. The rear wheel is a conventional non-self-propelling wheel **152.** The power wheel **150** is installed to the forks **155** of the bicycle frame though the hook washers and axle as described above. Electric wires **131** connect the controller of the power wheel **150** to a display panel **136** which is installed near the bicycle handle bar **142.**

In Fig. 7, there is also only one power wheel **250,** but it is installed to the bicycle as a rear wheel. The front wheel is a conventional non-self-propelling wheel **252.** The power wheel **250** is installed to the chain stay **156** of the bicycle frame though the hook washers and axle as described above. Electric wires **231** connect the controller of the power wheel **250** to a display panel **236** which is installed near the bicycle handle bar **242.**

In Fig. 8, there are two power wheels **350** installed both at the front side and rear side of the bicycle. Accordingly, there are two sets of electric wires **331** connecting these two power wheels **350** to a common display panel **336** and a handle bar **342.**

Now turning to the operations of the power wheels described above. During operation, the cyclist can choose to pedal the bicycle and/or activate the power wheel(s) for propelling the bicycle. In the case of only one power wheel at the front (e.g. as shown in Fig. 6) side, the pedal and chain system is completely isolated from the power wheel since the pedal and chain system only works for the conventional non-self-propelling rear wheel. The cyclist may choose to either pedal the bicycle, use the front power wheel, or both at the same time.

In the case of only one power wheel at the rear (e.g. as shown in Fig. 7) side, the pedal and chain system is able to drive the rear power wheel. The cyclist may choose to either pedal the bicycle, or use the front power wheel, but not using both at the same time. When the cyclist does not pedal the bicycle, and uses instead the powered propelling of the power wheel, the motor generates a rotational driving force, which is then transformed to an output power with lower speed but higher torque by the gear reduction module. The output power is then transmitted to the one-way clutch. Since the output carrier of the one-way clutch rotates faster than the wheel hub in this case (the wheel hub is idle), the one-way clutch is able to transmit the driving force the wheel hub and in turn the power wheel is driven to rotate by the motor. When the cyclist pedals the bicycle, but does not use the propelling function of the power wheel, then the one-way clutch as described above does not cause the power wheel hub to rotate and the bicycle is now used just like a conventional bicycle without a power wheel. However, it is not possible to utilize both the pedaling power and the motor output power at the same time to drive the power wheel due to the presence of the power wheel.

When both wheels of the bicycle are power wheels like the case shown in Fig. 8, then the front wheel is independent and can be controlled separately from the rear wheel. The rear wheel is used in a way similar to that in Fig. 7.

In using the power wheel on the bicycle, the cyclist looks at the display panel described above to obtain operation status and other important information of the bicycle / power wheel including the bicycle speed, odometer information, remaining battery life, the torque, etc. When the cyclist wants to control the power wheel for example to activate / deactivate it, he or she may use a rotatable knob installed on the handle bar. The rotatable knob upon actuation sends a control signal to the controller in the power wheel through electric wires so as to enable control to the power wheel.

The exemplary embodiments of the present invention are thus fully described. Although the description referred to particular embodiments, it will be clear to one skilled in the art that the present invention may be practiced with variation of these specific details. Hence this invention should not be construed as limited to the embodiments set forth herein.

While the invention has been illustrated and described in detail in the drawings and foregoing description, the same is to be considered as illustrative and not restrictive in character, it being understood that only exemplary embodiments have been shown and described and do not limit the scope of the invention in any manner. It can be appreciated that any of the features described herein may be used with any embodiment. The illustrative embodiments are not exclusive of each other or of other embodiments not recited herein. Accordingly, the invention also provides embodiments that comprise combinations of one or more of the illustrative embodiments described above. Modifications and variations of the invention as herein set forth can be made without departing from the spirit and scope thereof, and, therefore, only such limitations should be imposed as are indicated by the appended claims.

For example, the power wheels as described and illustrated in Figs. 1-8 are made into standard bicycle wheel size. However, it is clear that for other types of vehicles, the power wheels according to the present invention can also be made into other dimensions, such as with different radius and width (when looking along the radial direction). In particular, the housing of the power wheel hub can be designed to have a larger radius and/or width, therefore providing more or less interior space for accommodating the battery cells.

In addition, the battery cells as illustrated in Figs. 3-5b are arranged to be perpendicular to the radial direction of the power wheel. In other words, the battery cells are configured in a way that their longitudinal directions are parallel to the central axis of the motor shaft. However, in other variations the battery cells may be fixed in different ways, for example the battery cells may be aligned in a radiating pattern that each battery cell is placed along the radial direction of the power wheel.

In a variation of the present invention, the bicycle on which power wheels are installed do not have the sprocket and chain system for driving the wheels using pedaling force. Rather, an electrical generator is coupled to the pedals so that the pedaling action by the cyclist causes the generator to generate electric power. The electric power is then transmitted to the battery module for recharging the battery module. At the same time, the pedals are connected to a sensor which is able to generate control commands to the power wheel controller according to the force, speed, torque, etc. of the pedals. The power wheel may then be controlled according to the commands generated by the pedaling actions of the cyclist.

In the preferred embodiments described above, the power wheels are installed on a bicycle. No doubt that the power wheels may also be used in other types of vehicle to achieve self-propelling, such as unicycle, bicycle, tricycle, or four-wheel vehicle.

In one variation, the electric wires extending from the controller of the power wheel hub may also be used to supply electrical currents for recharging the battery module in the power wheel. In this case there will be multiple electric wires, some of them are used for power transmission and the others are used for signaling.

In another variation, the display panel installed near the handle bar of the bicycle may be integrated with a control panel with buttons or keys to control the power wheel. The rotatable knob or other separate controlling means may be omitted when using the integrated display and control panel.

In the embodiments illustrated in Figs. 4-5b above, four battery cells are connected by short conductive strips and eight battery cells are connected by long conductive strips. However, those skilled in the art should realize that other types of the battery connection and combination is also possible, such as more or fewer battery cells may be connected in a group, and parallel / series connections may be configured according to practical requirements to provide a total output of the battery module with required voltage / current.

## Claims

1. A wheel hub capable of being coupled to an axle of a wheel such that the wheel hub is rotatable around the axle, the wheel hub comprising:
a) a housing adapted to be rotatably supported on the axle;
b) a motor comprising a stator and a rotor; the stator adapted to be fixedly connected to the axle; the rotor connected to the housing via a transmission mechanism; and
c) a battery module; wherein, both the battery module and the motor are located inside the housing; the battery module placed external of the motor.

2. The wheel hub of claim 1, where the rotor and the stator of the motor are arranged to be coaxial with the axle around a central axis when the wheel hub is supported on the axle; the battery module located in an inner space of the housing which is external of the rotor and the stator along a radial direction from the central axis.

3. The wheel hub of claim 2, wherein the inner space is in a circumferential shape.

4. The wheel hub of claim 2, wherein the battery module further comprises a plurality of battery cells evenly distributed in the inner space.

5. The wheel hub of claim 4,
Wherein the battery cells each is in a longitudinal shape; at least a part of the battery cells configured in a way that their longitudinal directions are parallel to the central axis;
or
the battery module comprises two or more rows of the battery cells stacked one on another along the radial direction;
or
two or more of the battery cells are electrically connected together via one or more conductive strip.

6. The wheel hub of claim 1, wherein the battery module is fixedly connected to a casing of the motor whereby the battery module is not rotatable with respect to the axle.

7. The wheel hub of claim 1, wherein the transmission mechanism further comprises a gear reduction module.

8. The wheel hub of claim 7, wherein the gear reduction module is a planetary gear system; an input of the planetary gear system connected to an output shaft of the motor; an output of the planetary gear system connected to the housing.

9. The wheel hub of claim 1, wherein the transmission mechanism further comprises a one-way clutch; an input of the one-way clutch connected to an output shaft of the motor; an output of the one-way clutch connected to the housing; and preferably, the one-way clutch comprises a flywheel.

10. The wheel hub of claim 1,
further comprises a controller contained in the housing and connected to the motor; the controller further adapted to connect to an external device;
or.
further comprises a sprocket fixedly connected to the housing; the sprocket adapted to be connected to and driven by an external chain.

11. A power wheel which is adapted to be coupled to a vehicle frame, comprising:
a) an axle for connecting the power wheel to the vehicle frame;
b) a wheel hub coupled to the axle such that the wheel hub is rotatable around the axle, the wheel hub comprising:
i) a housing adapted to be rotatably supported on the axle;
ii) a motor comprising a stator and a rotor; the stator adapted to be fixedly connected to the axle; the rotor connected to the housing via a transmission mechanism; and
iii) a battery module;
wherein, both the battery module and the motor located inside the housing; the battery module placed external of the motor; and
c) a rim fixedly connected to the housing of the wheel hub.

12. The power wheel of claim 11, further comprises a plurality of spokes; the housing of the wheel hub connected to the rim by the plurality of spokes.

13. A bicycle comprising a frame and at least one power wheel rotatably connected to the frame, the power wheel comprising:
a) an axle for connecting the power wheel to the vehicle frame;
b) a wheel hub coupled to the axle such that the wheel hub is rotatable around the axle, the wheel hub comprising:
i) a housing adapted to be rotatably supported on the axle;
ii) a motor comprising a stator and a rotor; the stator adapted to be fixedly connected to the axle; the rotor connected to the housing via a transmission mechanism; and
iii) a battery module;
wherein, both the battery module and the motor located inside the housing; the battery module placed external of the motor; and
c) a rim fixedly connected to the housing of the wheel hub.

14. The bicycle of claim 13, further comprises a handle bar connected to the frame, and a display panel mounted on the handle bar; the power wheel further comprising a controller contained in the housing and connected to the motor; the controller further electronically connected to the display panel.

15. The bicycle of claim 14, wherein the display panel is connected to the display panel by wires or through wireless communication devices.
